# FASCICULE DE BREVET EUROPEEN

(11) **EP 0 772 663 B1**
(45) Date de publication et mention de la délivrance du brevet: **28.07.1999**
(21) Numéro de dépôt: 96920866.9
(22) Date de dépôt: 30.05.1996
(51) Int. Cl.: C10B 53/02, B27K 3/00

(54) **PROCEDE DE RECYCLAGE DES BOIS TRAITES ET L'INSTALLATION DE MISE EN OEUVRE DU PROCEDE**
VERFAHREN UND VORRICHTUNG ZUM RECYCLEN VON BEHANDELTEM HOLZ
METHOD FOR RECYCLING TREATED WOOD AND INSTALLATION FOR IMPLEMENTING THE METHOD

(30) Priorité: 31.05.1995 FR 9506732
(43) Date de publication de la demande: 14.05.1997
(73) Titulaire: Beaumartin S.A., 33170 Gradignan (FR)
(72) Inventeur: HERY, Jean, Sébastien, F-33200 Bordeaux (FR)
(74) Mandataire: Dupuis, François
(86) Numéro de dépôt international: FR9600809
(87) Numéro de publication internationale: WO9638515

(56) Documents cités:
- EP-A- 0 070 710
- EP-A- 0 234 087
- EP-A- 0 298 951
- FR-A- 616 625

## Description

L'invention se rattache au secteur technique du recyclage des bois traités et tout particulièrement ceux traités au CCA (cuivre, chrome, arsenic) qui sont les plus délicats à recycler du fait de leur contenu en arsenic, et qui sont utilisés dans de nombreuses applications notamment en tant que poteaux électriques ou téléphoniques, traverses de chemin de fer, palettes ou autres.

Le recyclage des produits à base de bois est actuellement très timidement pratiqué pour répondre aux exigences de la préservation de l'environnement, à celles du législateur mais également pour tenir compte des contraintes économiques.

Le recyclage des bois non traités ne pose pas de problème grave puisque les produits constitués en ces matériaux peuvent être brûlés ou être déchiquetés, broyés en vue d'autres applications pour la réalisation de sous-produits naturels ou mélangés à d'autres composants plastiques ou autres.

Le recyclage des bois traités est plus problématique car il pose des problèmes qui n'ont pas été résolus à ce jour. Ce recyclage a été rendu obligatoire dans la CEE par la Décision du Conseil Européen du 22 décembre 1994 et en application de la Directive 91/689 CEE du 12.12.1991

Si l'on se rapporte à une application des bois traités à la conception de poteaux électriques ou téléphoniques ou traverses de chemin de fer, on comprend que le problème posé est crucial si l'on considère les millions de poteaux et de traverses en service en France et dans les autres pays. Ces poteaux ou traverses ont une durée de vie importante de l'ordre de 25 ans en moyenne. Les traitements de ces poteaux ont été généralement effectués par imprégnation sous vide. Il y a maintenant 25 ans qu'a commencé en France la généralisation du traitement au CCA qui offre de bien meilleurs résultats de qualité de traitement en soi, mais aussi et surtout des qualités d'antiseptique, de propreté et de durée inégalées à ce jour, grâce au pouvoir de fixation du CCA dans le bois, qui est bien meilleur que. celui de tous les autres produits existants pour la protection du bois.

Un des problèmes rencontrés réside dans le fait qu'il est quasiment impossible pour un individu non averti de repérer et d'identifier des bois traités aux sels métalliques et à fortiori ceux traités aux CCA des autres vieux bois non traités. Alors que les bois traités à la créosote ou au pentachlorphénol se repèrent plus facilement à cause de leur aspect extérieur.

De plus dans le cas de bois traités, la combustion peut s'avérer très dangereuse et encore plus s'il s'agit de bois traités au CCA, non seulement par la pollution de l'environnement qu'ils peuvent générer, mais aussi pour les risques qu'ils font encourir à la santé des personnes.

Si l'on considère que la récupération du bois, et des poteaux de bois, traités ou non traités, et des traverses, s'effectue souvent d'une manière empirique et anarchique, on comprend l'intérêt que peut avoir pour la santé publique l'organisation rationnelle du ramassage de vieux bois traités et leur élimination postérieure ou recyclage.

Différentes tentatives ont été développées pour résoudre le problème posé du recyclage des bois traités en général et de ceux traités au CCA en particulier.

Il a tout d'abord été proposé la réutilisation du bois, mais celle-ci est peu rentable et sa commercialisation non faisable dans des conditions économiques satisfaisantes.

Une autre possibilité était le recyclage comme élément de décoration de plates-bandes en procédant à un broyage du bois en lui faisant subir un traitement de coloration à l'autoclave. Cette technique n'a pas eu de suite faute de possibilité de marché pour le produit.

La mise en décharge n'est pas satisfaisante en égard des contraintes du législateur.

Le stockage n'est guère applicable en égard des espaces nécessaires.

L'option de l'incinération dans des incinérateurs classiques avec d'autres déchets n'est pas réalisable non plus car les éléments contenus dans le bois traité, notamment l'arsenic du CCA, ont tendance à se combiner avec d'autres éléments présents dans les déchets pour former des composés qui ne sont pas maîtrisables. En outre, sous l'influence du choc thermique air ambiant / température foyer, la plus grande partie de l'arsenic contenu dans le bois traité au CCA s'évapore entraînant avec lui d'autres métaux lourds.

Au-dessus de 450°, les particules de tri-oxyde d'arsenic deviennent extrêmement fines et difficiles à capter, si ce n'est avec d'énormes moyens de captation et lavage de fumées. Il peut de plus apparaître une situation plus grave encore dans le cas où les autres éléments brûlés avec du bois traité au CCA soient susceptibles de produire de l'hydrogène naissant qui, en se combinant avec l'arsenic du CCA, provoque la formation d'arsine.

Au vu des résultats de ces expériences et en tenant compte de ces contraintes, il a été envisagé de recourir à d'autres méthodes de recyclage afin d'obtenir d'abord la séparation du bois et des produits de traitement. Pour cela, on a étudié différents systèmes de séparation par lavage chimique, par microbiologie, ou par combustion contrôlée.

La méthode par lavage chimique consiste en la séparation des métaux lourds par voie humide, en procédant au broyage du bois jusqu'à en faire une sciure la plus fine possible, en la trempant ensuite dans un bain contenant une solution acide. Un filtre permet de séparer le liquide de la sciure humide qui est alors estimé propre et peut être adressée dans toute installation du combustion sans risque de pollution. Cependant, cette technique présente de nombreux inconvénients.

Quel que soit le mélange de produits chimiques utilisés, il s'agit toujours d'acides et les volumes de travail sont toujours énormes, quelle que soit leur concentration dans la solution.

Cette technique met en oeuvre un système en cascade où, après avoir lavé le bois avec la solution acide, il faut laver la solution acide avec de l'eau, puis traiter l'eau avant de la réutiliser, ce qui augmente les volumes à traiter et les capacités à installer.

Par ailleurs, les cycles sont longs, les installations surdimensionnées avec des coûts d'investissements très lourds.

Enfin, un tel système est sélectif et ne fonctionne que pour un seul type de produit de traitement à chaque fois.

La séparation par microbiologie en est à ses prémices et n'a pas d'application industrielle pour résoudre le problème posé. Des études ont été effectuées à partir de différentes souches de champignons mais restent à l'état d'expérimentation.

La séparation par combustion a fait l'objet de nombreuses recherches en s'appliquant à vérifier s'il y avait apparition d'arsine et quel était le comportement de l'arsenic dans les bois traités au CCA.

Si, sur le premier point, les auteurs et experts ont des avis convergents et considèrent qu'il n'y a pas de risque de formatin d'arsine lorsqu'on brûle seul des bois traités au CCA, il n'en est pas de même, par contre, sur le second point. Les expériences ayant été menées de façon très différentes, les résultats ont été divergents, de sorte que la plupart des Administrations des pays concemés ont réagi de façon similaire optant pour une solution d'attente : le stockage ou l'enfouissement provisoire des vieux bois traités.

A la suite de cela, la plupart des équipes ayant travaillé sur la combustion des bois traités ont abandonné. Cependant, au vu des connaissances actuelles, des coûts et investissements nécessaires, seule la technique de séparation par combustion peut vraisemblablement être adoptée aujourd'hui pour permettre une industrialisation du recyclage des bois traités.

L'incinération du bois dans une chaudière spécialisée à des températures supérieures à 1300° Celsius afin de tout volatiliser et de récupérer ensuite, dans les gaz de combustion, tous ces produits grâce à une installation complexe est une solution réalisable mais coûteuse. Cette technique connue entraîne des risques non négligeables lors de la manipulation des gaz à haute température contenant des métaux lourds. Cela implique des systèmes et moyens de sécurité et de contrôle nombreux et fiables avec une maintenance continue. Par ailleurs, le maintien de hautes températures exige des quantités d'énergie importantes, en tout cas supérieures à celles que l'on pourra récupérer de la combustion du bois. L'importance de l'investissement qu'exige un système de sécurité adapté à cette méthode, oblige à recourir à un gigantisme de l'installation pour en relativiser le coût. Ce gigantisme obligé enlève tout réalisme au fonctionnement d'un tel système.

C'est donc à partir de l'ensemble de ces contraintes, des différents travaux développés ainsi que rappelés, que le Demandeur a travaillé pour trouver une solution au problème posé notamment concernant les poteaux bois traités au CCA dont il est l'un de principaux fabricants.

La démarche du Demandeur s'est établie dans une orientation nouvelle par rapport aux études, essais effectués antérieurement, en partant de l'idée de tenter de bloquer toute évaporation de métaux lourds et en particulier de l'arsenic lors de la combustion afin de les récupérer dans les cendres.

Une autre exigence était de travailler à basse température afin d'avoir une balance énergétique positive, de nécessiter des installations moins complexes et moins coûteuses, et d'en faciliter les coûts d'exploitation et de maintenance.

Les recherches se sont dirigées vers la solution du problème de la combustion du bois traité au CCA, puisque plus complexe, et répondant nécessairement aux exigences de la combustion des autres bois traités, dans l'optique de développer un système capable de brûler sans danger les bois traités quel que soit le type de traitement.

En tenant compte des caractéristiques physiques et atomiques de chacun des éléments composant le CCA et des constatations faites sur la combustion du bois traité au CCA par des équipes scientifiques du monde entier, avec en particulier les constatations faites sur la volatilisation de l'arsenic, l'idée inventive du Demandeur a été de s'orienter différemment des études, recherches et expériences effectuées précédemment, en recherchant les modalités et les conditions qui permettraient le contrôle et le blocage de l'évaporation de l'arsenic lors de la combustion du bois traité au CCA. Le Demandeur a découvert la nécessité d'avoir la maîtrise de nombreux paramètres qu'il a expérimentés : travailler à une température la plus basse possible, avec le moins d'air possible, avec un refroidissement rapide des gaz de combustion et du refroidissement des cendres de combustion.

Ainsi, l'originalité de l'invention réside dans un procédé nouveau de recyclage par combustion des bois traités remarquable en ce que les bois traités sont broyés sous forme de copeaux de bois pour être introduits dans un réacteur de grande hauteur et formant colonne, d'une part, de combustion dans sa partie basse et, d'autre part, de refroidissement dans sa partie haute,
et en ce que, dans la partie basse du réacteur, les copeaux sont soumis à une combustion adiabatique provoquée par des gaz chauds à faible teneur en oxygène et à une température de l'ordre de 400°C, la masse de copeaux situés au-dessus de la zone de combustion se chargeant de la chaleur excédentaire transportée par les gaz en provoquant un refroidissement progressif de ces gaz jusqu'à atteindre une température inférieure à 65°C, en formant un gradient inverse de température, et en provoquant une condensation qui, au contact des copeaux, dépose sur eux les particules notamment métalliques, goudron et vapeur, que les gaz de combustion détiennent,
et en ce que les gaz de combustion non compressibles déchargés de tous métaux lourds sont évacués hors du réacteur,
et en ce que la teneur en oxygène des gaz de combustion introduits dans la partie basse du réacteur est très faible pour éviter l'inflammation des copeaux, et augmenter l'effet réducteur,
et en ce que le charbon de bois obtenu de la combustion des copeaux inclut la réduction des métaux lourds et autres éléments polluants en vue d'un recyclage dans d'autres applications de traitement.

Selon une autre caractéristique de l'invention, l'installation pour le traitement et le recyclage de bois traités mettant en oeuvre le procédé est remarquable en ce qu'elle comprend un réacteur de grand volume susceptible de recevoir, par gravité et par le haut, des copeaux de bois traités, broyés préalablement, et alimentés en continu dans le réacteur, ledit réacteur étant agencé, dans sa partie basse, avec des moyens permettant l'introduction de gaz chauds à faible teneur en oxygène et à une température de 400°C pour autoriser, dans la partie basse du réacteur, la carbonisation des copeaux, ledit réacteur étant agencé en formant colonne pour recevoir un volume de copeaux de bois, et permettre le refroidissement et l'évacuation des gaz de combustion,
et en ce que le réacteur est en liaison avec une source générateur de chaleur contrôlant et régulant la température des gaz chauds à 400°C avec des moyens de distribution de gaz brûlés chauds à faible teneur en oxygène.

Ces caractéristiques et d'autres encore ressortiront bien de la suite de la description.

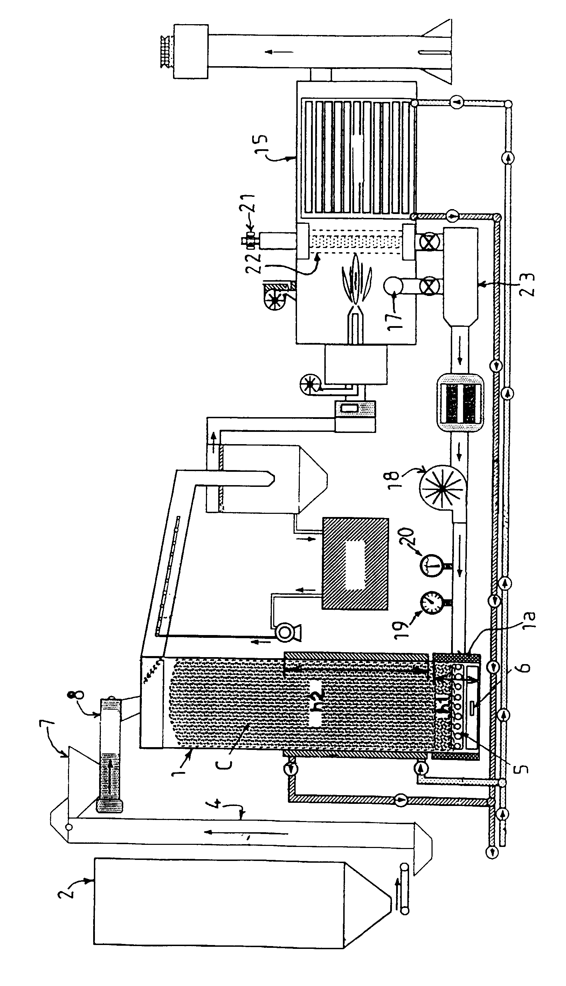

Pour fixer l'objet de l'invention illustré non limitativement à la figure du dessin représentant le schéma de l'installation de combustion selon l'invention.

Les bois traités pouvant être par exemple des poteaux électriques, téléphoniques, des traverses de chemin de fer ou autres, sont préalablement broyés par tous moyens et machines appropriés afin d'obtenir des copeaux, de dimensions déterminées. Ce broyage doit permettre d'obtenir un déchiquetage du bois dans le sens de la fibre facilitant ultérieurement la combustion ainsi qu'il sera précisé par la suite. Ces copeaux (C) provenant de bois imprégnés de produits antiseptiques lors de leur traitement, sont acheminés par tous moyens de convoyage dans un réservoir de réception (2). Les copeaux sont ensuite, à la sortie du réservoir, acheminés vers un réacteur (1) à l'aide de moyens de convoyage (4). Le réacteur précité est établi sous forme d'une colonne de grande hauteur dont la partie basse est agencée en chambre de combustion adiabatique et dont la partie haute comprend un système d'alimentation et de répartition uniforme des copeaux.

Plus précisément, dans la partie basse du réacteur, est prévue une zone de combustion des copeaux qui reposent avantageusement sur une grille oscillante (5) et permettant l'évacuation des produits de combustion sous forme de charbon, dans un cendrier (6) escamotable. La température, dans la zone inférieure du réacteur, est de l'ordre de 400°C, température choisie volontairement pour être en-dessous du seuil de la température de sublimation de l'arsenic, et au-dessus du point d'inflammation du bois traité au CCA (392°C). Tous les copeaux de bois situés au-dessus de la zone de combustion forment une colonne de refroidissement, de sorte que la sortie des gaz soit à une température inférieure à 65°C.

Selon une disposition avantageuse de l'invention, les copeaux, avant d'être introduits dans le réacteur, sont susceptibles d'être humidifiés en étant acheminés à la sortie du réservoir-collecteur (2) par une trémie (7) dans une chambre d'humidification (8) des copeaux de bois avant leur introduction dans le réacteur.

Lesdits copeaux sont empilés dans ce réacteur et, au fur et à mesure de la combustion des copeaux en fond de réacteur et par le fait de vibrations de la grille oscillante, lesdits copeaux s'enfoncent dans le corps du réacteur par gravité, ce demier étant rempli selon un cycle de fonctionnement en continu.

Ainsi, le procédé de recyclage des bois traités selon l'invention vise à réaliser une combustion adiabatique de bois traités et présentés en copeaux dans le réacteur en procédant au refroidissement rapide des gaz de combustion. Cette combustion s'effectue par la maîtrise du degré de la température dans la partie basse du réacteur à 400°C environ avec la fourniture d'air chaud pauvre en oxygène afin d'éviter l'inflammation des copeaux. La masse de copeaux située au-dessus de la zone de combustion se charge de la chaleur excédentaire transportée par les gaz émanant de la combustion en provoquant un refroidissement progressif de ces gaz et prenant dans la hauteur de la colonne du réacteur la forme d'un gradient inverse de température. Ce dernier provoque à son tour une condensation, qui au contact des copeaux, dépose sur ceux-ci, de façon dégressive, toutes les particules, notamment métalliques, goudrons ou vapeurs que ces gaz de combustion pourraient contenir. Le résultat de cette combustion est l'obtention en sortie d'un gaz combustible dans la partie haute de la colonne et dans la partie basse un charbon de bois dans lequel sont piégés la totalité des métaux lourds et autres éléments dangereux composant les antiseptiques dont le bois a été imprégné lors de son traitement. Par exemple, dans le cas de bois traités au CCA, on retrouve dans le charbon de bois, la totalité du cuivre, du chrome et de l'arsenic que contenait le bois après imprégnation.

Dans la partie supérieure du réacteur, la température de sortie des gaz qui ont traversé la colonne de copeaux de bois sera inversement proportionnelle à la hauteur de la colonne. Par ailleurs et dans l'hypothèse avantageuse d'une humidification préalable des copeaux, il s'avère que plus leur degré d'humidité en partie haute de la colonne sera élevé, plus l'effet de gradient inverse sera important et donc moins la colonne aura besoin de hauteur pour la même température de sortie.

Ainsi, la hauteur de la colonne des copeaux de bois dans le réacteur et le degré d'humidité des copeaux de bois, sont définis pour être suffisants et permettre d'abaisser la température des gaz en sortie de colonne en-dessous de 65°C. Ces gaz de combustion sont donc normalement propres car tous les éléments dangereux y compris l'arsenic se sont condensés sur les copeaux, du fait conjugué de l'effet de gradient thermique inverse, de la fonction de filtre assuré par la colonne de copeaux dans le réacteur, et par un niveau de température très au-dessous des points de condensation de chacun des éléments polluants. Il est également obtenu et constaté par le procédé que plus la température des gaz sortant est faible en partie haute du réacteur, plus riche est la composition du charbon de bois sortant extraite dans la partie basse du réacteur.

Le procédé selon l'invention, qui met en oeuvre un paramètre essentiel dans la maîtrise et le contrôle de refroidissement des gaz de combustion, est encore amélioré, si l'on accélère le refroidissement de la colonne de copeaux de bois en plaçant autour du réacteur au-dessus du niveau de la chambre de combustion un moyen complémentaire de refroidissement des parois comme une chemise de circulation d'eau. On améliore alors le rendement thermique du système. Pour assurer une fiabilité au procédé dans le temps, selon un fonctionnement en continu, il convient d'extraire régulièrement le charbon de bois obtenu et de préférence au fur et à mesure de son obtention en liaison bien entendu avec les autres paramètres et notamment d'alimentation proportionnelle de copeaux en bois préalablement humidifiés ou non dans le réacteur. Le contrôle de cette humidification est importante pour un fonctionnement régulier et contrôlé du procédé. Les variations de ce degré d'humidité peuvent être le cas échéant corrigées par le contrôle de la vitesse de circulation de l'eau dans la chambre de refroidissement entourant le réacteur.

Le procédé vise par ailleurs à assurer par une phase complémentaire à des fins de sécurité le contrôle de l'évacuation des gaz en sortie de la colonne du réacteur. On procède alors à un ou plusieurs lavages complémentaires et à une épuration des gaz dans le cadre avantageusement d'une distribution d'eau et recyclage en circuit fermé. Ceci garantit avantageusement une sécurité supplémentaire dans la mesure où le dispositif est à même d'arrêter et permet de récupérer, en cas d'accident, les vapeurs pouvant éventuellement s'échapper du réacteur.

Des prélèvements et échantillonnages de l'eau de lavage des gaz permettent de contrôler et d'identifier la présence ou non de particules de métaux lourds et autres éléments chroniques tels que le chlore ou l'arsenic.

L'identification de la présence de tels éléments permet immédiatement d'apporter les correctifs nécessaires.

Ainsi qu'il apparaît le procédé de recyclage de bois traités est particulièrement intéressant et notamment pour les bois traités au CCA. Le charbon de bois chargé de métaux lourds peut être recyclé en toute sécurité dans d'autres applications spécifiques connues.

Il convient maintenant de décrire les moyens principaux d'une installation mettant en oeuvre le procédé de l'invention, en se référant à la figure du dessin.

L'installation dans les moyens principaux de mise en oeuvre du procédé comprend des moyens d'alimentation en combustion en continu des copeaux de bois dans le réacteur. Le réacteur permet de carboniser les copeaux de bois dans les conditions de température de combustion et d'échappement des gaz rappelées précédemment. Le réacteur est en étroite liaison avec une source générateur de chaleur contrôlant et régulant la température déterminée à 400°C avec une distribution de gaz chaud à faible teneur en oxygène afin d'assurer la maîtrise et le contrôle des gaz et matières polluantes et la combustion des copeaux de bois.

A titre complémentaire, l'installation met en oeuvre des moyens de ventilation et d'amenée des gaz chauds dans le réacteur en provoquant leur traversée dans ledit réacteur, des moyens de contrôle des différents paramètres (température, pression, flux, teneur en oxygène), des moyens d'extraction des gaz en provenance du réacteur, des moyens de mélange d'air pur avec des gaz brûlés.

Par ailleurs, ladite installation comprend des systèmes de sécurité et de contrôle complémentaires pour vérifier et identifier la présence ou non de certains métaux lourds à la sortie du réacteur, ces moyens incluant un système d'épuration des gaz.

On décrit ci-après plus en détail l'installation de mise en oeuvre du procédé.

L'installation comprend le réacteur (1) composé d'une colonne en acier, d'un diamètre en rapport avec la quantité horaire de copeaux à carboniser, cette colonne' incluant de bas en haut :
- Un cendrier étanche équipé d'un système d'évacuation des cendres.
- Une entrée (1a) des gaz chauds situés dans la partie basse du réacteur, celle-ci étant calorifugée d'une manière appropriée sur une hauteur (h1) du réacteur.
- Une grille oscillante (5) permettant d'évacuer les produits carbonisés et d'organiser par effets vibratoires un écoulement vers le bas des copeaux de bois. Le mouvement de la grille est effectué par tous moyens connus.
- Une zone de combustion dont les parois sont revêtues intérieurement d'un matériau réfractaire sur une hauteur (h2) au-dessus de la grille oscillante, cette hauteur pouvant être par exemple de l'ordre de 25 centimères environ.
- Une zone de refroidissement du réacteur établie au-dessus de la zone de combustion précitée. Cette zone de refroidissement est avantageusement de l'ordre de 2,5 fois le diamètre du réacteur et elle constitue la colonne du réacteur. Autour de celle-ci et partiellement sur sa hauteur, dans une proportion avantageuse des deux tiers, il est prévu l'adjonction d'une chemise à circulation d'eau jouant le double rôle de refroidisseur et d'échangeur de chaleur.
- Une entrée étanche d'alimentation de copeaux de bois située dans la partie haute du réacteur.
- Au même niveau de cette dernière, une sortie des gaz de combustion protégée par une grille destinée à éviter l'envol des copeaux.

A titre complémentaire éventuellement, le réacteur peut être agencé avec un dispositif de répartition radiale uniforme des copeaux de bois, ce dispositif étant situé dans la partie haute du réacteur.

L'installation comprend en outre un générateur de chaleur susceptible de fournir des gaz chauds à 400°C pauvres en oxygène afin d'éviter l'inflammation du bois dans le réacteur et de favoriser la réduction des éléments polluants. Des moyens permettent de contrôler le volume des gaz chauds qui doivent être en proportion avec la quantité horaire de copeaux à carboniser.

L'installation comprend un ventilateur centrifuge disposé entre le générateur de chaleur et la partie basse du réacteur qui a pour but de délivrer les gaz chauds à la température de 400°C dans la zone de combustion, le ventilateur, par sa capacité, permettant audit gaz de traverser la colonne de copeaux de bois dans le réacteur, en même temps que d'aspirer les gaz brûlés du générateur de chaleur.

Afin d'assurer une distribution d'air chaud à faible teneur en oxygène, l'installation comprend en outre une boîte de mélange qui a pour fonction de combiner de l'air frais en provenance de l'extérieur avec des gaz brûlés prélevés du générateur de chaleur, afin de réguler la température en sortie de la boîte de mélange et le contenu en oxygène.

Il est prévu en outre de disposer un système d'alimentation des copeaux dans des conditions d'étanchéité par rapport à l'environnement en vue de leur distribution dans la partie haute du réacteur. Lesdits copeaux de bois en provenance d'un silo de stockage peuvent avantageusement transiter dans un humidificateur situé au-dessus de la partie supérieure du réacteur afin d'assurer une alimentation continue avec un degré d'humidité déterminé des copeaux de bois.

Il est prévu en outre, dans le cadre de l'installation, un système de sécurité permettant, par épuration des gaz, de contrôler la teneur en particules des gaz à la sortie du réacteur. Ce système d'épuration s'effectue à un ou plusieurs étages de lavage par rideaux d'eau pulvérisée, recyclage des eaux en circuit fermé, cyclone d'épuration et filtre de disseccation. Ce système est avant tout un élément de sécurité permettant d'arrêter et de récupérer en cas d'accident les vapeurs pouvant éventuellement s'échapper du réacteur. Il peut aussi être utilisé à des fins de contrôle en faisant des prélèvement cycliques d'échantillon de l'eau de lavage, sur lesquels on pourra doser les éléments critiques tels que le cuivre, le chrome, l'arsenic, le chlore...

Avantageusement, il peut être prévu, en sortie du système d'épuration des gaz, un extracteur de gaz ayant pour mission de contrôler le débit et la pression des gaz de combustion extraits du réacteur et passant à travers le système d'épuration.

L'installation comprend, à la sortie de l'extracteur, une chaudière avec brûleur de gaz pauvres ayant pour but de brûler des gaz à une température supérieure à 1100°C et de les maintenir à cette température pendant plus de deux secondes, afin de les évacuer ensuite par l'intermédiaire d'une cheminée selon les normes imposées.

Avantageusement, l'installation peut être agencée de telle sorte à réaliser un circuit fermé permettant de prélever une partie des gaz brûlés à travers la chaudière, pour les recycler ensuite dans le réacteur à une température de 400°C après mélange avec une dose d'air frais en provenance de l'extérieur, et contrôle de la teneur en oxygène.

Plus précisément, la chaudière (15) de combustion des gaz est reliée à la partie basse du réacteur pour transférer, par une prise (17) de gaz chaud, une partie de ces derniers vers le réacteur grâce au ventilateur (18) de chauffe, et ce à une température de 400°C. Des moyens de contrôle par sondes (19 - 20) de la température (19) et de l'oxygène (20) sont prévus sur le circuit d'acheminement du gaz vers le réacteur pour en vérifier les caractéristiques souhaitées. La sonde de contrôle d'oxygène a pour but de vérifier la teneur en oxygène des gaz acheminés dans le réacteur, cette teneur devant être faible pour permettre une carbonisation des copeaux en évitant l'apparition de flammes de combustion, et de favoriser la réduction de tous les composants non volatiles.

Une prise d'air frais (21) transite dans la chaudière (15) par un réchauffeur (22) pour être ensuite mélangée dans un bloc de mélange (23) avec les gaz chauds recyclés afin de réguler la température et la quantité d'oxygène des gaz chauds.

Ainsi, le fonctionnement de l'installation et la carbonisation des bois traités notamment au CCA s'effectuent selon un procédé bien particulier dans lequel la combustion des copeaux est réalisée à une température très basse en-dessous de la température de sublimation de l'arsenic et au-dessus de la température d'inflammation du bois, et se situant à 400°C, avec un refroidissement rapide des gaz de combustion obtenu, d'une part, par une alimentation préalable des copeaux sous forme humidifiée et, d'autre part, par un contrôle du refroidissement du réacteur. La température des gaz de combustion, à la sortie haute du réacteur, est inférieure à 65°C.

Les copeaux qui ont été carbonisés ont récupéré les molécules des composants des produits d'imprégnation et d'arsenic en particulier, ce charbon pouvant alors être recyclé dans d'autres applications connues.

L'ensemble des métaux lourds qui ont été réduits et qui sont intégrés dans le charbon de bois, ne sont plus solubles et dangereux pour l'environnement ou les personnes travaillant ou les manipulant.

Le procédé selon l'invention, à travers l'installation qui a été décrite à titre non limitatif, vise donc à maîtriser la combustion des bois traités, en évitant la volatilisation des métaux lourds et autres éléments nocifs tels que le chlore ou l'arsenic grâce à une maîtrise de la température de combustion qui est inférieure à la température de sublimation de l'arsenic. Par ailleurs, le procédé vise, dans tout son cycle, à réduire la température des gaz de combustion permettant de travailler dans le cadre d'installations plus sécurisantes et moins complexes donc moins coûteuses.

L'originalité de l'invention qui consiste également à humidifier les copeaux de bois permet une réduction de la température avec un refroidissement constant des gaz, les condensats restant sur le bois qui, après combustion adiabatique, deviendra du charbon. On maîtrise ainsi parfaitement la chaîne de transformation en évitant une volatilisation des éléments nocifs. L'environnement extérieur est donc parfaitement protégé. Le procédé selon l'invention et l'installation de mise en oeuvre du procédé permettent un contrôle continu à tous instants du procédé assurant la non évaporisation de l'arsenic ou du chlore en permettant des réglages immédiats si nécessaires du système de combustion. L'invention est donc particulièrement avantageuse et répond de manière très satisfaisante aux problèmes posés à l'origine du traitement des vieux bois traités en général et de ceux traités au CCA et arrivés en fin de cycle, en particulier.

## Revendications

1. Procédé de recyclage des bois traités, caractérisé en ce que les bois traités sont broyés sous forme de copeaux de bois pour être introduits dans un réacteur (3) de grande hauteur et formant colonne, d'une part, de combustion dans sa partie basse et, d'autre part, de refroidissement dans sa partie haute,
et en ce que, dans la partie basse du réacteur, les copeaux sont soumis à une combustion adiabatique provoquée par des gaz chauds à faible teneur en oxygène et à une température de l'ordre de 400°C, la masse de copeaux situés au-dessus de la zone de combustion se chargeant de la chaleur excédentaire transportée par les gaz en provoquant un refroidissement progressif de ces gaz jusqu'à atteindre une température inférieure à 65°C, en formant un gradient inverse de température, et en provoquant une condensation qui, au contact des copeaux, dépose sur eux les particules notamment métalliques, goudron et vapeur, que les gaz de combustion détiennent,
et en ce que les gaz de combustion non compressibles déchargés de tous métaux lourds sont évacués hors du réacteur,
et en ce que la teneur en oxygène des gaz de combustion introduits dans la partie basse du réacteur est très faible pour éviter l'inflammation des copeaux, et augmenter l'effet réducteur,
et en ce que le charbon de bois obtenu de la combustion des copeaux inclut la réduction des métaux lourds et autres éléments polluants en vue d'un recyclage dans d'autres applications de traitement.

2. Procédé selon la revendication 1, caractérisé en ce que les copeaux de bois sont préalablement humidifiés avant d'être introduits dans le réacteur.

3. Procédé selon l'une quelconque des revendications 1 et 2, caractérisé en ce que les gaz de combustion sont évacués, à la sortie du réacteur, dans une ou plusieurs chambres d'humidification pour assurer, à titre de sécurité, une barrière et un contrôle de la présence ou non des particules nocives dans lesdits gaz.

4. Procédé selon l'une quelconque des revendications 1 à 3, caractérisé en ce que l'on procède à la maîtrise et au contrôle des refroidissements des gaz de combustion dans le réacteur par une intervention sur le degré d'humidification des copeaux de bois, et par l'insertion d'un circuit de refroidissement complémentaire autour du réacteur.

5. Procédé selon l'une quelconque des revendications 1 à 4, caractérisé en ce que des moyens de contrôle par sondes sont disposés pour réguler la température de combustion des gaz chauds et leur teneur en oxygène à leur entrée dans la partie basse du réacteur.

6. Procédé selon l'une quelconque des revendications 1 à 5, caractérisé dans son application au recyclage de tous les bois traités y compris ceux aux cuivre, chrome et arsenic (CCA).

7. Installation pour le traitement et le recyclage de bois traités mettant en oeuvre le procédé selon l'une quelconque des revendications 1 à 6, caractérisée en ce qu'elle comprend un réacteur de grand volume (3) susceptible de recevoir, par gravité et par le haut, des copeaux de bois traités, broyés préalablement, et alimentés en continu dans le réacteur, ledit réacteur étant agencé, dans sa partie basse, avec des moyens permettant l'introduction de gaz chauds à faible teneur en oxygène et à une température de 400°C pour autoriser, dans la partie basse du réacteur, la carbonisation des copeaux, ledit réacteur étant agencé en formant colonne pour recevoir un volume de copeaux de bois, et permettre le refroidissement et l'évacuation des gaz de combustion,
et en ce que le réacteur est en liaison avec une source générateur de chaleur contrôlant et régulant la température des gaz chauds à 400°C avec des moyens de distribution de gaz brûlés chauds à faible teneur en oxygène.

8. Installation selon la revendjcation 7, caractérisée en ce qu'elle comprend des moyens de ventilation et d'amenée des gaz chauds dans le réacteur en provoquant leur traversée dans le réacteur, des moyens de contrôle des différents paramètres (température, pression, flux, teneur en oxygène), des moyens de mélange d'air pur avec des gaz brûlés chauds en vue de leur distribution dans le réacteur.

9. Installation selon l'une quelconque des revendications 7 et 8, caractérisée en ce qu'elle comprend, à la sortie du réacteur, des systèmes de sécurité complémentaires incluant un système d'épuration des gaz permettant le contrôle et l'identification d'éventuels éléments polluants.

10. Installation selon la revendication 7, caractérisée en ce que le réacteur (1) composé d'une colonne inclut de bas en haut de la colonne:
- un cendrier étanche équipé d'un système d'évacuation des cendres,
- une entrée (1a) des gaz chauds situés dans la partie basse du réacteur,
- une grille oscillante (5) permettant d'évacuer les produits carbonisés et d'organiser par effets vibratoires un écoulement vers le bas des copeaux de bois,
- une zone de combustion dont les parois sont revêtues intérieurement d'un matériau réfractaire,
- une zone de refroidissement du réacteur établie au-dessus de la zone de combustion,
- une entrée étanche d'alimentation de copeaux de bois située dans la partie haute du réacteur,
- au même niveau de cette dernière, une sortie des gaz de combustion protégée par une grille destinée à éviter l'envol des copeaux et des moyens de répartition radiale uniforme des copeaux.

11. Installation selon la revendication 10, caractérisée en ce que, autour de la zone de refroidissement et partiellement sur sa hauteur, la colonne de réacteur reçoit une chemise à circulation d'eau jouant le double rôle de refroidisseur et d'échangeur de chaleur.

12. Installation selon la revendication 8, caractérisée en ce qu'elle comprend un ventilateur centrifuge disposé entre le générateur de chaleur et la partie basse du réacteur ayant pour fonction de délivrer des gaz chauds à température de 400°C dans la zone de combustion et permettant auxdits gaz de combustion de traverser la colonne de copeaux de bois dans le réacteur, le ventilateur permettant en même temps l'aspiration des gaz en provenance du générateur de chaleur.

13. Installation selon l'une quelconque des revendications 8 et 12, caractérisée en ce qu'elle comprend une boîte de mélange combinant l'air frais en provenance de l'extérieur avec des gaz brûlés prélevés du générateur de chaleur.

14. Installation selon la revendication 7, caractérisée en ce que les copeaux de bois en provenance d'un moyen de stockage transitent dans un humidificateur situé au-dessus de la partie supérieure du réacteur afin d'être introduits de celui-ci avec un degré d'humidité contrôlée.

15. Installation selon la revendication 7, caractérisée en ce qu'elle comprend un système de sécurité permettant, par épuration des gaz, de contrôler la teneur en particules des gaz à la sortie du réacteur,
et en ce que le système d'épuration est établi à un ou plusieurs étages de lavage des gaz et des moyens permettant de recycler l'eau de lavage en circuit fermé.

16. Installation selon la revendication 15, caractérisée en ce que, en sortie du système d'épuration des gaz, est disposé un extracteur de gaz pour contrôler le débit et la pression des gaz de combustion extraits du réacteur.

17. Installation la revendication 7, caractérisée en ce que le générateur de chaleur inclut une chaudière avec brûleur de gaz pauvres en provenance du réacteur en vue de les évacuer après brûlage et maintien à une température supérieure à 1100°C pendant plus de deux secondes, en autorisant par des moyens de prélèvement, un recyclage de certains des gaz brûlés en vue de les distribuer à température de 400°C dans le réacteur.

## Patentansprüche

1. Verfahren für das Recycling von behandeltem Holz, dadurch gekennzeichnet, daß das behandelte Holz in Holzspäne zermahlen und dann in einen hohen Reaktor (3) eingeführt wird, der im unteren Teil eine Verbrennungskolonne und im oberen Teil eine Kühlkolonne bildet,
und daß die Späne im unteren Teil des Reaktors einer adiabatischen Verbrennung ausgesetzt werden, die bei einer Temperatur von 400°C durch heiße Gase mit geringem Sauerstoffgehalt hervorgerufen wird, wobei die Spänemasse oberhalb des Verbrennungsbereichs die von den Gasen mitgeführte überschüssige Wärme aufnimmt, dabei ein allmähliches Abkühlen der Gase bis zu einer Temperatur unter 65°C bewirkt, einen umgekehrten Temperaturgradienten bildet und eine Kondensation auslöst, bei der im Kontakt mit den Spänen die von den Verbrennungsgasen mitgeführten Metall-, Teer- und Dampfteilchen darauf ablagert werden,
und daß die nicht komprimierbaren, von allen Schwermetallen entledigten Verbrennungsgase aus dem Reaktor entfernt werden,
und daß der Sauerstoffgehalt der in den unteren Teil des Reaktors eingeführten Verbrennungsgase sehr gering ist, um das Entzünden der Späne zu vermeiden und den reduzierenden Effekt zu steigern,
und daß die aus der Verbrennung der Späne hervorgehende Holzkohle die Reduktion der Schwermetalle und anderer Schadstoffe zwecks Recycling in anderen Behandlungsanlagen einschließt.

2. Verfahren nach Anspruch 1, dadurch gekennzeichnet, daß die Holzspäne vor dem Einführen in den Reaktor angefeuchtet werden.

3. Verfahren nach einem der Ansprüche 1 und 2, dadurch gekennzeichnet, daß die Verbrennungsgase am Ausgang des Reaktors in eine oder mehrere Befeuchtungskammern geleitet werden, um sicherheitshalber eine Barriere zu bilden und das Vorhandensein bzw. Nichtvorhandensein schädlicher Teilchen in den Gasen zu kontrollieren.

4. Verfahren nach einem der Ansprüche 1 bis 3, dadurch gekennzeichnet, daß die Abkühlung der Verbrennungsgase im Reaktor durch Einwirkung auf den Feuchtigkeitsgrad der Holzspäne und durch Einfügen eines zusätzlichen Kühlkreislaufs um den Reaktor herum beherrscht und kontrolliert wird.

5. Verfahren nach einem der Ansprüche 1 bis 4, dadurch gekennzeichnet, daß Kontrolleinrichtungen per Sonden vorgesehen sind, um die Verbrennungstemperatur der heißen Gase und ihren Sauerstoffgehalt beim Eintreten in den unteren Teil des Reaktors zu kontrollieren.

6. Verfahren nach einem der Ansprüche 1 bis 5, dadurch gekennzeichnet, daß das Verfahren auf das Recycling aller behandelten Hölzer einschließlich derjenigen, die mit Kupfer, Chrom und Arsen (KCA) behandelt wurden, angewandt wird.

7. Anlage für die Behandlung und das Recycling von behandeltem Holz nach einem der Ansprüche 1 bis 6, dadurch gekennzeichnet, daß die Anlage einen großvolumigen Reaktor (3) umfaßt, der in der Lage ist, behandelte, vorher zermahlene und durch Schwerkraft von oben kontinuierlich in den Reaktor eingegebene Holzspäne aufzunehmen, wobei der Reaktor im unteren Teil Einrichtungen für das Einleiten heißer Gase mit geringem Sauerstoffgehalt bei einer Temperatur von 400°C besitzt, um im unteren Teil des Reaktors die Verkohlung der Späne zu ermöglichen, wobei der Reaktor kolonnenförmig ausgebildet ist, um ein bestimmtes Volumen an Holzspänen aufzunehmen und das Abkühlen und Ableiten der Verbrennungsgase zu ermöglichen,
und daß der Reaktor mit einer wärmeerzeugenden Quelle in Verbindung steht, die durch Einrichtungen für die Verteilung von heißen verbrannten Gasen mit geringem Sauerstoffgehalt die Heißgastemperatur von 400°C kontrolliert und reguliert.

8. Anlage nach Anspruch 7, dadurch gekennzeichnet, daß sie Einrichtungen für die Lüftung und Zuleitung der heißen Gase in den Reaktor durch Auslösen ihrer Durchführung durch den Reaktor, Einrichtungen für die Kontrolle der einzelnen Parameter (Temperatur, Druck, Fluß, Sauerstoffgehalt) und Einrichtungen für das Vermischen von reiner Luft mit heißen verbrannten Gasen zwecks Verteilung im Reaktor umfaßt.

9. Anlage nach einem der Ansprüche 7 oder 8, dadurch gekennzeichnet, daß sie am Ausgang des Reaktors zusätzliche Sicherheitssysteme einschließlich eines Gasreinigungssystems für die Kontrolle und Identifizierung eventueller Schadstoffe besitzt.

10. Anlage nach Anspruch 7, dadurch gekennzeichnet, daß der aus einer Kolonne bestehende Reaktor (1) von unten nach oben folgende Teile umfaßt :
- einen dichten Aschebehälter mit einem System für das Entfernen der Asche,
- einen Heißgaseinlaß (1a) im unteren Teil des Reaktors,
- einen Schwingrost (5) für das Entfernen der verkohlten Produkte und das Abrutschen der Holzspäne nach unten durch Rütteleffekte,
- einen Verbrennungsbereich, dessen Wände innen mit einem feuerfesten Material ausgekleidet sind,
- einen Abkühlbereich des Reaktors oberhalb des Verbrennungsbereichs,
- einen dichten Einlaß für die Beschickung mit Holzspänen im oberen Teil des Reaktors,
- auf der gleichen Ebene wie letzterer einen Auslaß für die Verbrennungsgase, der durch ein Gitter geschützt ist, um das Auffliegen der Späne zu vermeiden, und Einrichtungen für die gleichförmige radiale Verteilung der Späne.

11. Anlage nach Anspruch 10, dadurch gekennzeichnet, daß die Reaktorkolonne um die Kühlzone herum und teilweise in der Höhe einen Wassermantel besitzt, der die doppelte Aufgabe eines Kühlers und Wärmeaustauschers erfüllt.

12. Anlage nach Anspruch 8, dadurch gekennzeichnet, daß sie einen zwischen dem Wärmeerzeuger und dem unteren Teil des Reaktors angeordneten Kreisellüfter besitzt, der die Aufgabe hat, heiße Gase mit einer Temperatur von 400°C in den Verbrennungsbereich abzugeben, und der die Verbrennungsgase durch die Holzspänekolonne im Reaktor bläst, wobei der Lüfter gleichzeitig das Ansaugen der vom Wärmeerzeuger kommenden Gase ermöglicht.

13. Anlage nach einem der Ansprüche 8 oder 12, dadurch gekennzeichnet, daß sie einen Mischkasten umfaßt, in dem die Frischluft von außen mit aus dem Wärmeerzeuger entnommenen verbrannten Gasen zusammengebracht wird.

14. Anlage nach Anspruch 7, dadurch gekennzeichnet, daß die aus einer Lagereinrichtung stammenden Holzspäne einen über dem oberen Teil des Reaktors angeordneten Befeuchter durchlaufen, um mit einem kontrollierten Feuchtigkeitsgrad in den Reaktor eingeführt zu werden.

15. Anlage nach Anspruch 7, dadurch gekennzeichnet, daß sie ein Sicherheitssystem umfaßt, das durch Reinigung der Gase die Kontrolle des Partikelgehalts der Gase am Ausgang des Reaktors ermöglicht,
und daß das Reinigungssystem aus einen oder mehreren Gaswaschstufen und Einrichtungen für die Rückführung des Waschwassers im geschlossenen Kreislauf besteht.

16. Anlage nach Anspruch 15, dadurch gekennzeichnet, daß am Ausgang des Gasreinigungssystems ein Gassauger für die Durchsatz- und Druckkontrolle der aus dem Reaktor abgesaugten Verbrennungsgase angeordnet ist.

17. Anlage nach Anspruch 7, dadurch gekennzeichnet, daß der Wärmeerzeuger einen Kessel mit Brenner für Schwachgase aus dem Reaktor zwecks Beseitigung nach dem Verbrennen und Aufrechterhaltung einer Temperatur von über 1100°C während mehr als zwei Sekunden umfaßt, wobei durch Entnahmeeinrichtungen eine Rückführung bestimmter verbrannter Gase zur Verteilung im Reaktor bei einer Temperatur von 400°C ermöglicht wird.

## Claims

1. Process for the recycling of treated wood, characterised in that the woods treated are ground into wood chips to be introduced into a tall reactor (3) in the form of a column designed, on the one hand, for combustion in the lower section and, on the other hand, for cooling in the upper section,
and in that, in the lower section of the reactor, the chips are subjected to adiabatic combustion provoked by hot gases with a low oxygen content, heated to a temperature of approximately 400°C, the column of chips located above the combustion zone takes up the excess heat carried by the gas and provides progressive cooling of this gas until it attains a temperature below 65°C and thus forms an inverse temperature gradient and provokes condensation which, in contact with the chips, deposits the particles contained in the combustion gas on these chips, in particular metal, tar and vapour particles,
and in that the non-compressible combustion gas free of all heavy metals is evacuated out of the reactor,
and in that the oxygen content in the combustion gas introduced into the lower section of the reactor is very low to avoid ignition of the chips and to increase the reduction effect,
and in that the wood charcoal obtained after combustion of the chips contains the reduction of heavy metals and other polluting elements in order to be recycled in other treatment applications.

2. Process as claimed in claim 1, characterised in that the wood chips are humidified prior to their introduction in the reactor.

3. Process as claimed in either of claims 1 and 2, characterised in that the combustion gas is evacuated through the reactor exhaust in one or more humidification chambers to ensure, for safety reasons, a blocking and monitoring of the presence or absence of harmful particles in the said gas.

4. Process as claimed in any one of claims 1 to 3, characterised in that cooling of the combustion gas in the reactor is achieved and monitored by varying the degree of humidification of the wood chips and by the addition of a cooling circuit around the reactor.

5. Process as claimed in any one of claims 1 to 4, characterised in that sensors for the control of combustion gas temperature and its oxygen content are placed on the intake side in the lower section of the reactor.

6. Process as claimed in any one of claims 1 to 5, characterised by its application for the recycling of all types of treated wood, including those treated with copper, chrome and arsenic (CCA).

7. Installation for the processing and recycling of treated wood designed for use with the process according to any of the aforementioned claims 1 to 6, characterised in that it comprises a large volume reactor (3) to be gravity filled from the top with pre-ground treated wood chips, supplied continuously to the reactor, the lower section of said reactor being designed for the introduction of hot gas with a low oxygen content at a temperature of 400°C to enable carbonisation of the wood chips in the lower section, said reactor being designed in the form of a column into which a certain volume of wood chips is introduced and which enables the cooling and evacuation of the combustion gas,
and in that the reactor is connected to a heat generator which monitors and controls the hot gas at a temperature of 400°C with a facility for the distribution of hot burnt gas with a low oxygen content.

8. Installation as claimed in claim 7, characterised in that it comprises a ventilation facility designed to draw the hot gas through the reactor, a means for monitoring the various parameters (temperature, pressure, flow-rate and oxygen content), and a means for mixing fresh air with the hot combustion gas before it is distributed in the reactor.

9. Installation as claimed in either of claims 7 and 8, characterised in that it comprises, on the output side of the reactor, additional safety systems including a gas purification system enabling the control and detection of possible polluting elements.

10. Installation as claimed in claim 7, characterised in that the reactor (1) is composed of a column which includes, from bottom to top:
- a sealed ash tray equipped with an ash evacuation system,
- a hot gas inlet (1a) located in the lower section of the reactor
- an oscillating grid (5) enabling evacuation of carbonised products and control of wood chip downflow by means of its vibration action,
- a combustion zone, the walls of which are provided with a refractory layer,
- a reactor cooling zone located above the combustion zone,
- a sealed wood chip supply inlet located in the top section of the reactor,
- at the same level as the latter, a combustion gas exhaust protected with a grid designed to prevent the updraft of chips and a means for the uniform radial distribution of these chips.

11. Installation as claimed in claim 10, characterised in that around the cooling zone and for part of its height the reactor column is fitted with a water cooling jacket fulfilling the double function of cooling and heat exchange.

12. Installation as claimed in claim 8, characterised in that it comprises a centrifugal ventilation fan placed between the heat generator and the lower section of the reactor and designed to deliver the hot gas at a temperature of 400°C to the combustion zone and enabling the said combustion gas to pass through the wood chip column in the reactor, the fan also enabling the suction of gas from the heat generator.

13. Installation as claimed in either of claims 8 and 12, characterised in that it comprises a mixing box for the combination of fresh air taken from outside the installation with burnt gas taken from the heat generator.

14. Installation as claimed in claim 7, characterised in that the wood chips taken from the storage hopper pass through a humidifier located above the upper section of the reactor ensuring the chips enter the reactor with a predetermined humidity level.

15. Installation as claimed in claim 7, characterised in that it comprises a safety system designed, by means of gas purification, to control the particles contained in the exhaust gas leaving the reactor,
and in that the purification system is composed of one or several gas washing stages and a means for recycling the washing water in a closed circuit.

16. Installation as claimed in claim 15, characterised in that a gas extractor fan is placed on the outlet side of the gas purification system and is designed to control the flow-rate and pressure of the combustion gas extracted from the reactor.

17. Installation as claimed in claim 7, characterised in that the heat generator includes a boiler with a burner for the burning of low-oxygen gas taken from the reactor and kept at a temperature greater than 1,100°C for a period of at least 2 seconds, said gas being evacuated after burning, and authorises, by means of tapping, the recycling of some of the burnt gas to be distributed in the reactor at a temperature of 400°C.
